# EUROPÄISCHE PATENTSCHRIFT

(11) **EP 0 448 155 B1**
(45) Veröffentlichungstag und Bekanntmachung des Hinweises auf die Patenterteilung: **12.10.1994**
(21) Anmeldenummer: 91200535.2
(22) Anmeldetag: 12.03.1991
(51) Int. Cl.: C03B 37/016, C03B 19/12

(54) **Verfahren zur Herstellung von Glaskörpern**
Method for the production of glass bodies
Procédé de production de corps vitreux

(30) Priorität: 14.03.1990 DE 4008110
(43) Veröffentlichungstag der Anmeldung: 25.09.1991
(73) Patentinhaber: Philips Patentverwaltung GmbH, 22335 Hamburg (DE); Philips Electronics N.V., 5621 BA Eindhoven (NL)
(72) Erfinder: Clasen, Rolf, Dipl.-Phys.Dr., W-5100 Aachen (DE)
(74) Vertreter: Volmer, Georg, Dipl.-Ing.

(56) Entgegenhaltungen:
- EP-A- 0 200 243
- CHEMICAL ABSTRACTS, vol. 107, no. 16, Oktober 1987 Columbus, Ohio, USA Seite335; ref. no. 139526X & JP-A-62158127 (SEIKO EPSON CORP.) (14-07-87)
- PATENT ABSTRACTS OF JAPAN vol. 4, no. 151 (C-28)(633) 23 Oktober 1980,& JP-A-55 095636 (HITACHI SEISAKUSHO) 21 Juli 1980,

## Beschreibung

Die Erfindung betrifft ein Verfahren zur Herstellung von Glaskörpern, bei dem das als Suspension vorliegende Ausgangsmaterial für den Glaskörper mittels einer dem herzustellenden Glaskörper entsprechenden Form verformt, während des Kontaktes mit der Form auf eine Temperatur unterhalb des Siedepunktes der Dispergierflüssigkeit erhitzt, nach Vernetzen des Ausgangsmaterials entformt und der auf diese Weise hergestellte poröse Grünkörper gereinigt und gesintert wird.

Das eingangs genannte Verfahren ist insbesondere geeignet für die Herstellung von hochreinen Glaskörpern. Hochreine Kieselglasrohre werden z.B. als Substratrohre für die Herstellung von optischen Wellenleitern mittels eines Innenbeschichtungsverfahrens gebraucht, wo nur Verunreinigungen an Nebengruppenelementen und OH-Gruppen von wenigen ppb toleriert werden können. Es können z.B. strukturierte Vorformen für optische Wellenleiter hergestellt werden, indem besonders reine Kieselglasstäbe mit mit Fluor dotierten Mantelgläsern kombiniert werden. Scheiben aus hochreinem Kieselglas werden beispielsweise als Maskenträger in der Halbleitertechnologie benötigt, die eine hohe Transmission von Strahlung im ultravioletten Spektralbereich bei 180 nm aufweisen müssen. Aus diesem Grund sind auch für diesen Anwendungszweck von Kieselglas nur sehr geringe Verunreinigungen, insbesondere an Metallionen, zulässig.

Aus der deutschen Offen legungsschrift DE-A-35 11 450.9 ist ein Verfahren zur Herstellung von Glaskörpern bekannt, bei dem aus dem Ausgangsmaterial für den Glaskörper in Form einer thixotropen Suspension ein poröser Grünkörper durch Strangpressen geformt und der Grünkörper anschließend gereinigt und gesintert wird, wobei das Ausgangsmaterial in einem Zustand mit Viskositätsminimum in eine an ihrem Austrittsende verschlossene Strangpresse eingefüllt, in der Strangpresse auf eine Temperatur unterhalb des Siedepunktes der Dispergierflüssigkeit erhitzt und anschließend nach Öffnen der Strangpresse zu einem über das Mundstück der Strangpresse formstabil verformten Grünkörper strangverpreßt wird. Aus dieser Vorveröffentlichung ist bekannt, daß ein besonders hoher Thixotropieeffekt bei Suspensionen aus hochdispersen SiO₂-Teilchen eines Teilchendurchmessers im Bereich von 10 bis 500 nm eintritt, der noch durch Zusatz einer die Vernetzung der Feststoffpartikel in der Suspension fördernden ionogenen Substanz, die den pH-Wert der Suspenion in den sauren Bereich (pH < 3) oder in Richtung auf den basischen Bereich (pH > 5,5 bis 8) verschiebt, unterstützt wird, wobei Vernetzungsreaktionen zwischen den Feststoffteilchen der Suspension durch eine Erhitzung der Suspension auf Temperaturen unterhalb des Siedepunktes des Dispergiermittels beschleunigt werden können. Die Erwärmung des Ausgangsmaterials durch Mikrowellenenergie gemäß dieser Vorveröffentlichung hat sich als schnelle und vorteilhafte Methode erwiesen, die Vernetzungszeit der in eine Form gegossenen Suspension drastisch zu verringern. Dieses Verfahren ist jedoch mit einem relativ großen apparativen Aufwand hinsichtlich der Beheizung der Suspension verbunden.

Der Erfindung liegt die Aufgabe zugrunde, ein Verfahren der eingangs genannten Art so zu verbessern, daß nicht nur eine effiziente Erwärmung des als Suspension vorliegenden Ausgangsmaterials für den Glaskörper gewährleistet ist, sondern das hinsichtlich des Erwärmungsschrittes technisch noch leichter zu realisieren ist.

Diese Aufgabe wird erfindungsgemäß dadurch gelöst, daß das mittels der Form verformte Ausgangsmaterials an zwei einander gegenüberliegenden Flächen mit Elektroden kontaktiert und durch direkten Durchgang von Wechselstrom erhitzt wird.

Nach einer vorteilhaften Weiterbildung des erfindungsgemäßen Verfahrens wird zum Erhitzen des verformten Ausgangsmaterials ein Wechselstrom einer Frequenz von 50 Hz eingesetzt. Mit einem Strom dieser Frequenz treten an den Elektroden keinerlei Probleme auf; ein noch höher frequenter Wechselstrom erscheint nicht erforderlich.

Nach einer weiteren vorteilhaften Ausgestaltung des erfindungsgemäßen Verfahrens werden Elektroden aus Messing, Edelstahl, Platin, elektrisch leitfähigen Kunststoffen oder Kohlenstoff eingesetzt. Bei aus dem Ausgangsmaterial geformten Rohren und Stäben kann der Wechselstrom über Elektroden durch den Formling fließen, die an den beiden Stirnseiten der Form angeordnet sind. Bei plattenförmigen großflächigen Formlingen werden die beiden Elektroden zweckmäßigerweise aus elektrisch leitenden Folien gebildet, die die beiden Hauptflächen des Formlings kontaktieren.

Nach vorteilhaften Weiterbildungen des Verfahrens gemäß der Erfindung wird als Ausgangsmaterial für den Glaskörper eine Suspension eingesetzt, die SiO₂-Partikel eines Durchmessers im Bereich von 10 bis 500 nm, vorzugsweise 15 bis 100 nm, mit einem mittleren Teilchendurchmesser von 40 nm bei einem Feststoff:Dispergierflüssigkeit-Gewichtsverhältnis von 1:0,8 bis 1:2 enthält. Hiermit ist der Vorteil verbunden, daß sich bei Zusatz von 0,1 bis 5,0 Gew.%, vorzugsweise 0,5 bis 1,0 Gew.%, bezogen auf den Feststoffanteil der Suspension, eines ionogenen Zusatzstoffes, der den pH-Wert der Suspension in Richtung auf den basischen Bereich verschiebt, ein besonders hoher Thixotropieffekt ergibt und daß aus einem solchen Ausgangsmaterial trotz seiner hohen Füllung mit hochdispersen Feststoffteilchen sehr homogene, hochverdichtete Grünkörper hergestellt werden können.

Nach weiteren vorteilhaften Ausgestaltungen der Erfindung wird als ionogener Zusatzstoff eine Ammoniumverbindung und insbesondere NH₄F in wässeriger Lösung eingesetzt. Ammoniumverbindungen sind leicht flüchtig und sind daher in einem nachfolgenden Reinigungs-Erhitzungsschritt rückstandslos aus dem Grünkörper zu entfernen, so daß Quarzglaskörper einer sehr hohen Reinheit herstellbar sind. Durch den Zusatz einer Ammoniumverbindung, beispielsweise NH₃ in wässeriger Lösung, werden Grünkörper einer relativ hohen Festigkeit erreicht, da an den Kontaktstellen zweier SiO₂-Primärpartikel eine Gelaufbildung auftritt. Bei beispielsweise einer Suspensionstemperatur von 20 ^{o}C und einem pH-Wert ≦ 10 geht SiO₂ in der Größenordnung von etwa 100 ppm in Lösung und wird an den Kontaktstellen ausgeschieden und bildet damit eine Brückenschicht. Wird NH₄F in wässeriger Lösung als ionogener Zusatzstoff eingesetzt, kann eine Fluordotierung erreicht werden, die beispielsweise für die Herstellung von Mantelgläsern für optische Wellenleiter geeignet ist.

Mit dem Verfahren gemäß der Erfindung sind folgende Vorteile verbunden:
Die Aufwärmzeit der Probe ist nur durch die Größe des verwendeten Netzgerätes begrenzt. Es ist jedoch anzumerken, daß die Probe nicht auf Temperaturen höher als 80 ^{o}C erwärmt werden darf. Oberhalb dieser Temperaturen wird eine Gasblasenentwicklung in der Probe beobachtet. Die bei erhöhten Temperaturen vernetzten Proben haben eine gegenüber den bei Raumtemperatur vernetzten Proben eine etwas breitere Porenverteilung und eine leicht reduzierte Grünfestigkeit, was aber durch den Vorteil der sehr kurzen Vernetzungszeiten mehr als kompensiert wird. So ließ sich beispielsweise die Vernetzungszeit an plattenförmigen Grünkörpern auf eine Minute (Tₘₐₓ = 80 ^{o}C) reduzieren. Nach dieser Zeit war die Probe bereits so fest, daß sie sich problemfrei entformen und trocknen ließ. Die weitere Behandlung des Grünkörpers (Reinigung, Sinterung) kann dann in bekannter Weise erfolgen.

Bei der Herstellung von plattenförmigen Grünkörpern ist es zur leichteren Entformung des verfestigten Grünkörpers vorteilhaft, für die an der Probenoberfläche anliegende Elektrode eine elektrisch leitfähige Folie einzusetzen. Für diesen Zweck läßt sich z.B. mit Vorteil eine Membran aus regenerierter Zellulose (Dialysemembran) mit einer Porenweite von ≦ 100 nm einsetzen, die mit einer Elektrolytlösung (vorzugsweise wässerige NH₄F-Lösung) getränkt wird. Diese elektrisch leitende Folie wird über einen Flüssigkeitsfilm mit einer mechanisch stabilen Metallplatte kontaktiert. Nach der Vernetzung der Feststoffpartikel lassen sich zunächst die Metallplatten entfernen und anschließend lassen sich die Folien von den Oberflächen des verfestigten Grünkörpers abziehen, wobei eine sehr gute Oberflächenqualität erhalten wird.

Weitere Vorteile des erfindungsgemäßen Verfahrens liegen in der sehr einfachen und schnellen Herstellung von verformten Grünkörpern, aus denen durch anschließendes Trocknen, Reinigen und Sintern hochreine Kieselglaskörper erhalten werden können. Die Herstellung von großen Platten wird durch die Verwendung von elektrisch leitenden Folien, die sich nach der Formgebung und vor der Trocknung leicht abziehen lassen, sehr erleichtert.

Nachfolgend wird die Erfindung anhand von Ausführungsbeispielen beschrieben und in ihrer Wirkungsweise erläutert.

### Beispiel 1

100 g eines hochdispersen Kieselglaspulvers (Teilchendurchmesser 10 bis 100 nm, mittlerer Durchmesser etwa 40 nm) wurden in 100 ml einer 0,75%igen NH₄F-Lösung eingerührt und über eine Dauer von 15 min in einem Ultraschallbad dispergiert. Die Suspension wurde anschließend durch ein Kunststoffsieb mit einer Maschenweite von 125 µm gegossen, um grobe, noch nicht ausreichend dispergierte SiO₂-Teilchen zurückzuhalten. Die auf diese Weise erhaltene Suspension wurde in eine Zelle eingegossen, die aus einem nach oben offenen Rahmen (Material:PVC) mit einer Wandstärke von 5 mm mit einem darüber gespannten, an einem Ende verschlossenen Dialyseschlauch mit einem Porendurchmesser von 3,5 nm bestand. Der Dialyseschlauch wurde auf beiden Außenseiten der Zelle über einen etwa 1 mm breiten Flüssigkeitsfilm aus einer wässerigen 0,75%igen NH₄F-Lösung mit einer 1 mm dicken Edelstahlplatte kontaktiert. Die Abdichtung zwischen der Edelstahlplatte und dem auf dem PVC-Rahmen gespannten Dialyseschlauch erfolgte mit einer Gummidichtung.

Die Temperatur in der Zelle ließ sich mit einem in der Mitte des PVC-Rahmens eingelassenen Thermoelement, das etwa 5 mm weit in die Zelle hineinragte, messen.

Mit einer Wechselspannung von 15,9 V (50 Hz) wurde bei einem Strom einer von 3 auf 4 A ansteigenden Stromstärke nach einer Dauer von 2 min eine Suspensionstemperatur von 68 ^{o}C erreicht. Die Probe wurde zu diesem Zeitpunkt entformt und war bereits so fest, daß sie sich gut hantieren und in der oben genannten Weise weiterbehandeln ließ. Nach der abschließenden Sinterung wurde eine klare Kieselglasplatte mit glatten Oberflächen erhalten.

### Beispiel 2

In gleicher Weise wie zu Beispiel 1 beschrieben wurde eine plattenförmige Probe hergestellt. Die Erwärmung erfolgte mit einer Wechselspannung von 18 V, wobei der Strom binnen einer Minute von 4,5 auf 7,5 A anstieg und eine Temperatur von 80 ^{o}C erreicht wurde. Die Probe war nach dieser Zeit ebenfalls fest und wurde wie zu Beispiel 1 beschrieben weiterbehandelt und es wurde eine Kieselglasplatte vergleichbarer Qualität erhalten.

### Beispiel 3

Eine Suspension wie zu Beispiel 1 beschrieben wurde in einen Folienschlauch aus Polyäthylenterephthalat mit einem Durchmesser von 16 mm gegossen, der an beiden Enden mit einem Messingstopfen abgeschlossen war, wobei der obere Messingstopfen eine Bohrung zum Eingießen der Suspension aufwies. Die beiden Messingstopfen wurden als Elektroden eingesetzt und waren 60 cm voneinander entfernt. Es wurde eine Wechselspannung von 250 V angelegt. Die Stromstärke stieg binnen 15 min von 0,1 auf 0,2 A, wobei die Probe eine Maximaltemperatur von 60 ^{o}C erreichte.

Nach dieser Zeit war die Probe so fest, daß der Folienschlauch aufgeschnitten und der stabförmige Grünkörper in gewohnter Weise weiterbehandelt und nach der Sinterung ein klarer Kieselglasstab erhalten werden konnte.

Die gemäß allen Ausführungsbeispielen hergestellten Grünkörper wurden langsam über eine Dauer von 24 h an Luft getrocknet, wonach die getrockneten Grünkörper über eine Dauer von 100 min auf eine Temperatur von 800 ^{o}C erhitzt und zur Entfernung von Verunreinigungen über eine Dauer von 1,5 h einem mit SOCl₂ gesättigten O₂-Gasstrom ausgesetzt wurden. Die anschließende Sinterung erfolgte bei einer Temperatur von 1500 ^{o}C in Heliumatmosphäre mit 2 Vol% Chlorgaszusatz, wobei die Grünkörper mit einer Absenkgeschwindigkeit von 3 mm/min durch den Ofen geführt wurden. Es wurden transparente Glaskörper erhalten, die Verunreinigungen, insbesondere Wasser und Übergangsmetalle, nur noch in einer Menge < 50 ppb enthielten. Die Glaskörper hatten eine Dichte von 2,20 g/cm³ und Brechungsindices n_{D} = 1,458 und waren blasen- und schlierenfrei.

## Patentansprüche

1. Verfahren zur Herstellung von Glaskörpern, bei dem das als Suspension vorliegende Ausgangsmaterial für den Glaskörper mittels einer dem herzustellenden Glaskörper entsprechenden Form verformt, während des Kontaktes mit der Form auf eine Temperatur unterhalb des Siedepunktes der Dispergierflüssigkeit erhitzt, nach Vernetzen des Ausgangsmaterials entformt und der auf diese Weise hergestellte poröse Grünkörper gereinigt und gesintert wird,
dadurch gekennzeichnet,
daß das Ausgangsmaterial an zwei einander gegenüberliegenden Flächen mit Elektroden kontaktiert und durch direkten Durchgang von Wechselstrom erhitzt wird.

2. Verfahren nach Anspruch 1,
dadurch gekennzeichnet,
daß zum Erhitzen des verformten Ausgangsmaterials ein Wechselstrom einer Frequenz von 50 Hz eingesetzt wird.

3. Verfahren nach den Ansprüchen 1 und 2,
dadurch gekennzeichnet,
daß Elektroden aus Messing, Edelstahl, Platin, elektrisch leitfähigen Kunststoffen oder Kohlenstoff eingesetzt werden.

4. Verfahren nach den Ansprüchen 1 bis 3,
dadurch gekennzeichnet,
daß als Ausgangsmaterial für den Glaskörper eine Suspension eingesetzt wird, die SiO₂-Partikel eines Durchmessers im Bereich von 10 bis 500 nm, vorzugsweise 15 bis 100 nm, mit einem mittleren Teilchendurchmesser von 40 nm enthält.

5. Verfahren nach Anspruch 4,
dadurch gekennzeichnet,
daß eine Suspension mit einem Feststoff:Dispergierflüssigkeit-Gewichtsverhältnis von 1:0,8 bis 1:2 eingesetzt wird.

6. Verfahren nach Anspruch 5,
dadurch gekennzeichnet,
daß als Dispergierflüssigkeit Wasser eingesetzt wird.

7. Verfahren nach Anspruch 4,
dadurch gekennzeichnet,
daß der Suspension ein ionogener Zusatzstoff zugefügt wird, der den pH-Wert der Suspension in Richtung auf den basischen Bereich (pH ≦ 10) verschiebt.

8. Verfahren nach Anspruch 7,
dadurch gekennzeichnet,
daß als ionogener Zusatzstoff eine Ammoniumverbindung eingesetzt wird.

9. Verfahren nach Anspruch 8,
dadurch gekennzeichnet,
daß als Zusatzstoff eine wässerige 5%ige NH₄F-Lösung eingesetzt wird.

10. Verfahren nach den Ansprüchen 7 bis 9,
dadurch gekennzeichnet,
daß der ionogene Zusatzstoff in einer Menge von 0,1 bis 5,0 Gew.%, vorzugsweise 0,5 bis 1,0 Gew.%, bezogen auf den Feststoffanteil der Suspension, zugegeben wird.

11. Verfahren nach den Ansprüchen 1 bis 10,
dadurch gekennzeichnet,
daß als Ausgangsmaterial eine wässerige Suspension eingesetzt wird, die SiO₂-Partikel eines mittleren Teilchendurchmessers von 40 nm bei einem Feststoff:Wasser-Gewichtsverhältnis von 1:1,1 enthält und der eine 5%ige wässerige NH₄F-Lösung in einer Menge von 0,75 Gew.%, bezogen auf den Feststoffanteil der Suspension, zugesetzt ist.

## Claims

1. A method of manufacturing glass bodies, in which method a suspension, being the starting material for the glass body, is shaped by using a mould which corresponds to the shape of the glass body to be manufactured, during contacting the mould said suspension being heated to a temperature below the boiling point of the dispersing liquid, after which the starting material is crosslinked and subsequently removed from the mould, and the porous green body thus manufactured is then purified and sintered, characterized in that the starting material is brought into contact with electrodes at two facing surfaces, and that it is heated by a direct passage of alternating current.

2. A method as claimed in Claim 1, characterized in that an alternating current with a frequency of 50 Hz is used to heat the shaped starting material.

3. A method as claimed in Claims 1 and 2, characterized in that electrodes of brass, noble steel, platinum, electrically conductive synthetic resins or carbon are used.

4. A method as claimed in Claims 1 to 3, characterized in that a suspension is used as the starting material for the glass body, which suspension contains SiO₂ particles having a diameter in the range from 10 to 500 nm, preferably 15 to 100 nm, with an average particle diameter of 40 nm.

5. A method as claimed in Claim 4, characterized in that a suspension having a solid : dispersing liquid weight ratio of 1 : 0.8 to 1 : 2 is used.

6. A method as claimed in Claim 5, characterized in that water is used as the dispersing liquid.

7. A method as claimed in Claim 4, characterized in that an ionogenic additive is added to the suspension, said additive moving the pH-value of the suspension towards alkalinity (pH ≦ 10).

8. A method as claimed in Claim 7, characterized in that an ammonium compound is used as the ionogenic additive.

9. A method as claimed in Claim 8, characterized in that an aqueous 5% NH₄F solution is used as the additive.

10. A method as claimed in Claims 7 to 9, characterized in that the ionogenic additive is added in a quantity of 0.1 to 5.0 wt.%, preferably 0.5 to 1.0 wt.%, of the solids content of the suspension.

11. A method as claimed in Claims 1 to 10, characterized in that an aqueous suspension is used as the starting material, said suspension containing SiO₂ particles with an average diameter of 40 nm and having a solid : water weight ratio of 1:1.1, a 5% aqueous NH₄F solution in a quantity of 0.75 wt.% of the solids content of the suspension being added to said suspension.

## Revendications

1. Procédé de fabrication de corps en verre, suivant lequel le matériau de départ pour le corps en verre, étant une suspension, est formé en utilisant un moule qui correspond à la forme du corps en verre à fabriquer, qui pendant le contact avec le moule est chauffé jusqu'à une température au-dessous du point d'ébullition du liquide de dispersion pour être démoulé après sa réticulation, et le corps vert poreux ainsi fabriqué est alors nettoyé et fritté, caractérisé en ce que deux surfaces mutuellement opposées du matériau de départ moulé sont munies d'électrodes et que ledit matériau est chauffé par le passage direct d'un courant alternatif.

2. Procédé selon la revendication 1, caractérisé en ce que l'on applique un courant alternatif présentant une fréquence de 50 Hz pour chauffer le matériau de départ moulé.

3. Procédé selon les revendications 1 et 2, caractérisé en ce que l'on utilise des électrodes en laiton, en acier noble, en platine, en résine synthétique électriquement conductrice ou en carbone.

4. Procédé selon les revendications 1 à 3, caractérisé en ce que l'on utilise comme matériau de départ pour le corps en verre une suspension qui comporte des particules en SiO₂ dont le diamètre est compris entre 10 et 500 nm, avantageusement entre 15 et 100 nm, et qui présente un diamètre de particule moyen de 40 nm.

5. Procédé selon la revendication 4, caractérisé en ce que l'on utilise une suspension comportant un solide dans un rapport de poids de solide : liquide de dispersion de 1 : 0,8 à 1 : 2.

6. Procédé selon la revendication 5, caractérisé en ce que l'on utilise l'eau comme liquide de dispersion.

7. Procédé selon la revendication 4, caractérisé en ce que l'on ajoute à la suspension un additif iogénique déplaçant le pH de la suspension vers l'alcalinité (pH ≦ 10).

8. Procédé selon la revendication 7, caractérisé en ce que l'on utilise un composé d'ammonium comme additif iogénique.

9. Procédé selon la revendication 8, caractérisé en ce que l'on utilise une solution aqueuse de 5% de NH₄F.

10. Procédé selon les revendications 7 à 9, caractérisé en ce que l'on ajoute l'additif iogénique dans une quantité comprise entre 0,1 et 5,0% en poids, avantageusement comprise entre 0,5 et 1% en poids par rapport à la quantité de solide de la suspension.

11. Procédé selon les revendications 1 à 10, caractérisé en ce que l'on utilise comme matériau de départ une suspension aqueuse comportant des particules de SiO₂ dont le diamètre de particule moyen est égale à 40 nm dans un rapport de poids de solide : eau de 1:1,1 et à laquelle on a ajouté une solution aqueuse de 5% de NH₄F dans une quantité de 0,75 en poids par rapport à la quantité de solide de la suspension.
